# FASCICULE DE BREVET EUROPEEN

(11) **EP 1 504 856 B1**
(45) Date de publication et mention de la délivrance du brevet: **27.04.2011**
(21) Numéro de dépôt: 04103818.3
(22) Date de dépôt: 06.08.2004
(51) Int. Cl.: B25J 9/06, B25J 9/10

(54) **Segment de structure articulée comprenant un vérin linéaire à conversion de mouvement par vis et écrou**
Segment einer Gelenkstruktur mit einem Linearantrieb mit Bewegungsübertragung mittels Schraube und Mutter
Segment of an articulated structure comprising a linear actuator with a movement conversion by screw and nut

(30) Priorité: 08.08.2003 FR 0350413
(43) Date de publication de la demande: 09.02.2005
(73) Titulaire: Commissariat à l'Énergie Atomique et aux Énergies Alternatives, 75015 Paris (FR)
(72) Inventeur: Garrec, Philippe, 91190 Gif sur Yvette (FR)
(74) Mandataire: Poulin, Gérard

(56) Documents cités:
- EP-A- 0 072 786
- FR-A- 2 807 959
- FR-A- 2 809 464
- JP-A- 61 192 486
- PATENT ABSTRACTS OF JAPAN vol. 1999, no. 05, 31 mai 1999 (1999-05-31) -& JP 11 037154 A (OKI ELECTRIC IND CO LTD), 9 février 1999 (1999-02-09)

## Description

Le sujet de cette invention est un segment de structure articulée, précisément du genre comprenant un vérin linéaire à conversion de mouvement par vis et écrou.

De tels mécanismes de vérin linéaire à conversion de mouvement offrent certains avantages, comme la précision du mouvement et de l'effort, très appréciés dans des domaines comme la robotique, la télémanipulation ou la simulation, où les structures articulées sont des bras de commande ou au contraire des bras esclaves, et un caractère au choix réversible ou irréversible de la conversion selon l'inclinaison du pas de vis. Un moteur est disposé sur un support appartenant à la structure principale du segment, son arbre fait tourner l'écrou par l'intermédiaire d'une transmission à courroie ou autre, et la rotation de l'écrou déplace la vis qui y est engagée. De façon équivalente, le moteur peut faire tourner la vis et la conversion du mouvement exerce la translation sur l'écrou, mais cette conception est équivalente à la précédente sous beaucoup d'aspects, et l'invention s'applique indifféremment à l'une ou l'autre d'entre elles. L'organe - vis ou écrou - mû en translation peut tirer sur un câble continu, tendu entre deux poulies disposées aux extrémités du support, et modifier l'angle d'articulation entre le support et un autre support, appartenant à un segment voisin, qui lui est articulé. Réciproquement, une rotation de cet autre support peut être imposée au vérin linéaire et se transmettre au moteur par une rotation forcée : cette situation existe dans les bras de commande maniés par un opérateur ; les moteurs sont alors des moteurs dits à retour d'effort offrant une résistance destinée à permettre une manipulation agréable du bras ou à simuler l'effort représenté par certains travaux, et aussi à maintenir le segment à la position qui lui a été imposée quand il a été relâché.

La rotation de l'organe devant se déplacer en translation doit être interdite sous peine de ruiner la précision du vérin. De nombreux mécanismes sont utilisés en pratique. On peut citer des chariots disposés sur l'organe en translation et munis de roues en appui sur deux pistes parallèles à la course de l'organe (FR-A-2 809 464). Ces pistes sont établies en général sur un manchon coaxial à la vis et ont pour effet de compliquer le segment et de l'alourdir. On pourrait en dire autant d'autres mécanismes qui ont été proposés, dont un exemple est décrit dans JP-A-61 192 486. C'est pourquoi une conception différente est proposée ici, dans laquelle les pistes sont désormais ménagées dans une rainure opérée dans le support même au lieu d'être établies sur une pièce supplémentaire conçue seulement pour cela et intégrée au vérin. Le manchon devient inutile et peut être supprimé. Sous sa forme la plus générale, l'invention concerne un segment de structure articulée comprenant un support, au moins un vérin placé sur le support et comprenant un moteur, un écrou, une vis engagée dans l'écrou, et un organe d'arrêt en rotation comprenant des galets roulant sur des pistes, l'un de la vis et de l'écrou étant entraîné en rotation par le moteur et l'autre de la vis et de l'écrou portant les galets, caractérisé en ce que les pistes sont aménagées dans une rainure opérée dans le support. De plus, le support consiste en une plaque à travers laquelle la rainure est opérée ; l'écrou et la vis sont disposés d'un côté de la plaque, un organe d'entraînement en rotation mû par le moteur est disposé de l'autre côté de la plaque, et une transmission s'étendant entre ledit organe d'entraînement et celui de la vis et de l'écrou qui est entraîné en rotation par le moteur traverse la plaque. On dispose alors de la possibilité d'aménager le dispositif de façon plus compacte qu'en le mettant tout entier d'un même côté de la plaque ou, plus généralement, dans un même plan : le moteur volumineux devrait être placé à côté de l'organe que le système à vis et écrou entraîne et qui est souvent une courroie sans fin montée entre deux poulies et qui occupe aussi une surface assez grande. Il en résulterait un encombrement important soit en largeur soit en longueur selon que le moteur serait monté à côté de la courroie ou au-delà d'une poulie ; cette contrainte disparaît si le moteur est mis derrière la plaque puisqu'il peut être monté au-dessus de la surface entourée parla courroie. Il est à noter que JP-A-11 037 154 décrit une transmission à vis et écrou où l'écrou est arrêté en rotation par des galets roulant sur les bords d'une rainure traversant l'enveloppe de la transmission.

Avantageusement, l'organe d'entraînement en rotation mû par le moteur a une longueur permettant de placer l'écrou à mi-longueur de la vis. Cette disposition permet de réduire le bras de levier entre l'écrou et le point d'application de la résultante des forces sur la vis, et donc le moment de flexion exercé sur elle et qui peut atteindre une grandeur considérable en pratique, ce qui rend les mécanismes à vis et écrou fragiles. Elle permet aussi, par un choix approprié de la longueur du moyen de transmission du mouvement du moteur, de placer ce dernier n'importe où sur le support et notamment de l'éloigner de l'écrou et de le placer à l'extrémité du support qui correspond, selon l'application privilégiée de l'invention, à l'extrémité proximale du segment articulé. Le moteur exerce un moment de basculement dû à son poids de beaucoup plus petite valeur à cet endroit.

Enfin, un support unique, notamment une plaque, peut porter au moins deux vérins semblables du genre décrit, qui peuvent être placés côte à côte, les moteurs d'un même côté de la plaque et les vis et les écrous de l'autre côté. Les vérins peuvent commander des segments successifs articulés entre eux. La disposition côte à côte définie ci-dessus est particulièrement compacte.

On passe désormais à la description des figures :

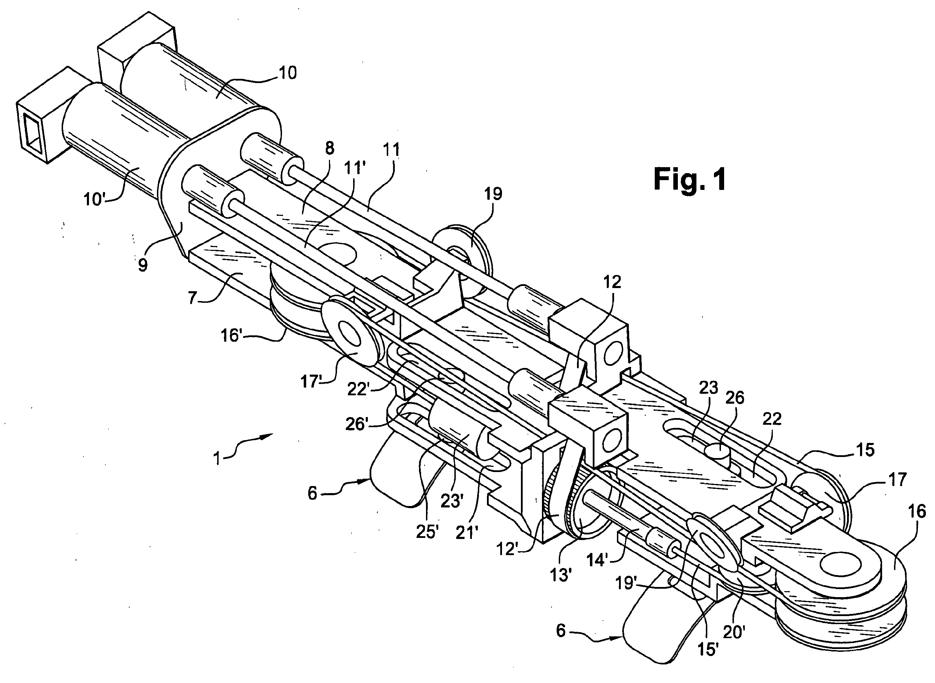

- la figure 1 illustre une réalisation du segment,

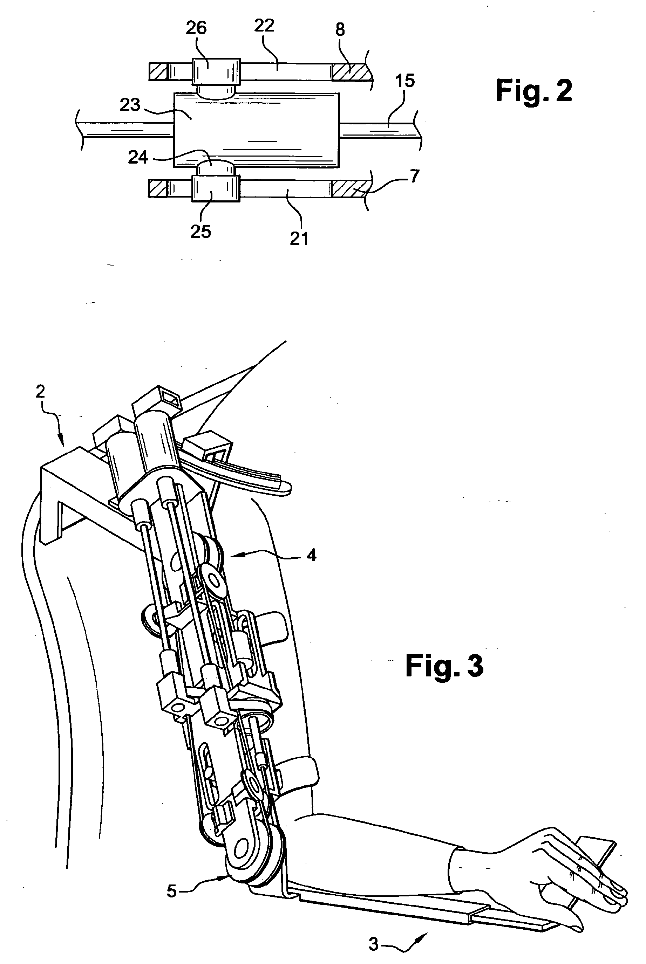

- la figure 2 un détail des parties essentielles (pour cette invention) du segment,
- la figure 3 une vue générale du segment et des éléments voisins, et

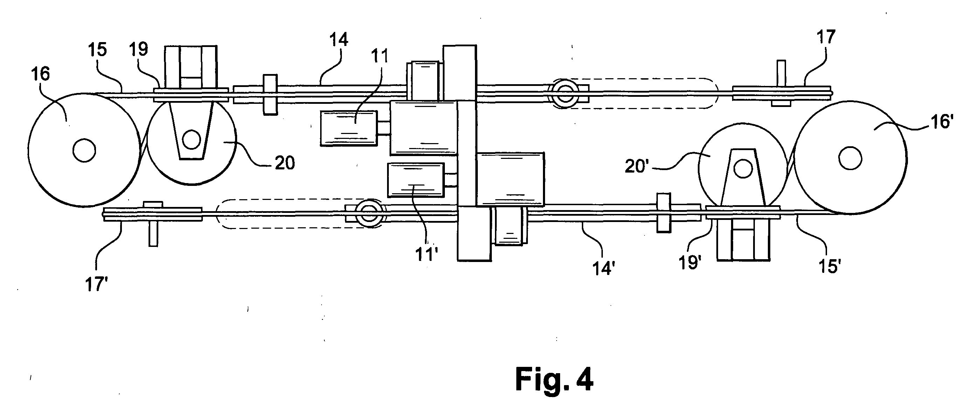

- la figure 4 une vue du mécanisme des vérins.

Bien des variantes de réalisation du segment sont possibles. L'une d'elle sera décrite plus en détail. Elle est de nature complexe, c'est-à-dire que l'invention est appliquée deux fois : elle concerne en effet un segment intermédiaire de bras manipulateur portant globalement le numéro de référence 1 et qui s'étend entre un segment d'épaule 2, pouvant être accroché à l'utilisateur, et un segment d'avant-bras 3 terminé par une poignée manipulée. Le segment 1 est relié aux segments d'épaule 2 et d'avant-bras 3 par des articulations d'épaule 4 et de coude 5. Il est posé au bras de l'utilisateur par des reposoirs 6. Chacun de ses mécanismes est associé à une des articulations 4 et 5.

Sa structure comprend une paire de plaques 7 et 8 parallèles. La première plaque 7 est du côté de l'utilisateur et porte les reposoirs 6, et la deuxième plaque 8 est une plaque extérieure. Une plate-forme 9 unit les plaques 7 et 8 entre elles du côté de l'articulation d'épaule 4, et deux moteurs 10 et 10' sont montés sur celle-là. Ils possèdent des arbres 11 et 11' qui s'étendent sur la deuxième plaque 8 jusqu'à des mécanismes de transmission à courroie 12 et 12' qui s'étendent au-delà de la deuxième plaque 8 jusqu'à des écrous 13 et 13' que les courroies font tourner. Des vis 14 et 14' sont engagées par filetage dans les écrous 13 et 13' et s'étendent entre les deux plaques 7 et 8 dans la direction de longueur du segment 1, comme les arbres 11 et 11'. Les vis 14 et 14' forment des boucles avec des câbles 15 et 15' tendus entre des poulies menées 16 et 16', des poulies opposées 17 et 17' et des paires de poulies de renvoi 19, 20 et 19', 20'. Pour chacune de ces câbleries, le câble 15 ou 15' passe successivement, à partir d'une extrémité de la vis 14 ou 14', par la poulie opposée 17 ou 17', la poulie de renvoi 19 ou 19', la poulie menée 16 ou 16' et la poulie de renvoi 20 ou 20' avant de joindre l'extrémité opposée de la vis 14 ou 14'. Entre les poulies 17 et 19 (ou 17' et 19'), il forme un brin sensiblement parallèle à la vis 14 ou 14' et s'étendant devant la deuxième plaque 8, près des arbres 11 et 11' et s'étend à travers la transmission 12 ou 12' sans la toucher ; la poulie de renvoi 19 ou 19' maintient le câble 15 ou 15' dans le plan de la poulie menée 16 ou 16', et la poulie de renvoi 20 ou 20' ramène le câble 15 ou 15' dans l'alignement de la vis 14 ou 14'. Les poulies menées 16 et 16' sont à double gorge et reçoivent des extrémités respectives du câble 15 ou 15', qui est coupé. Les extrémités des câbles 15 et 15' sont attachées dans les gorges. Cette disposition, possible pour des poulies qui ne tournent que d'une portion de tour, évite tout glissement du câble et elle est d'un emploi fréquent.

Les plaques 7 et 8 portent des paires de lumières 21, 21' et 22, 22' qui sont des rainures s'alignant dans la direction des vis 14 et 14' et s'étendant de part et d'autre d'elles. De plus, les vis 14 et 14' portent un chariot 23 ou 23' d'où dépassent des axes 24 et 24' transversaux porteurs de galets 25 et 26, ou 25' et 26', qui s'engagent en roulant dans les lumières 21, 22, 21' et 22'. Ce système assure l'arrêt en rotation des vis 14 et 14' et donc le bon fonctionnement du vérin linéaire à conversion de mouvement. Comme les lumières sont opérées directement dans les plaques 7 et 8 nécessaires pour matérialiser le segment 1, un gain d'encombrement et de poids substantiel est obtenu.

L'établissement des rainures (les lumières 21, 21', 22 et 22') dans le support impose d'en d'approcher la vis 14 ou 14', entre autres éléments du mécanisme, des plaques 7 et 8. Des difficultés de conception peuvent provenir d'un contact potentiel entre le support (les plaques 7 et 8 ici) et certains éléments volumineux du vérin comme l'écrou 13 ou 13' ou le moteur 10 ou 10'. Le support peut alors être rendu échancré ou creux pour supprimer ce risque de contact, ce qu'on a ici réalisé pour l'écrou 13 ou 13' et la transmission 12 ou 12' ; il est aussi possible de déporter le moteur 10 ou 10' au bout du segment 1, au-delà de l'articulation d'épaule 4 ici, ce qui est favorable puisque le mouvement de basculement qu'ils produisent est diminué et qu'ils peuvent même contribuer à un équilibrage statique du segment 1.

## Revendications

1. Segment (1) de structure articulée comprenant un support (7, 8) menant à deux éléments adjacents (2, 3) de la structure articulée, au moins un vérin placé sur le support et comprenant un moteur (10), un écrou (13), une vis (14) engagée dans l'écrou, et un organe d'arrêt en rotation (23) comprenant des galets (25, 26) roulant sur des pistes, l'un de la vis et de l'écrou étant entraîné en rotation par le moteur et l'autre de la vis et de l'écrou portant les galets, **caractérisé en ce que** les pistes sont ménagées dans une rainure (21, 22) opérée dans le support, **en ce que** le support comprend une plaque à travers laquelle la rainure est opérée, **en ce que** l'écrou et la vis sont disposés d'un côté de la plaque, **en ce qu'**un organe d'entraînement en rotation (11) mû par le moteur (10) est disposé de l'autre côté de la plaque, et **en ce qu'**une transmission (12) s'étendant entre ledit organe d'entraînement et celui de la vis et de l'écrou qui est entraîné en rotation par le moteur traverse la plaque.

2. Segment de structure articulée selon la revendication 1, **caractérisé en ce que** le support comprend une seconde plaque, à travers laquelle une seconde rainure est opérée, la seconde rainure recevant certains des galets, la vis et l'écrou étant logés entre les plaques.

3. Segment de structure articulée selon la revendication 1, **caractérisé en ce que** l'organe d'entraînement en rotation (11) mû par le moteur (10) a une longueur permettant de placer l'écrou à mi-longueur de la vis.

4. Segment de structure articulée selon la revendication 1, **caractérisé en ce qu'**il comprend un second vérin placé sur le support et comprenant aussi un moteur (10), un écrou (13), une vis (14) engagée dans l'écrou, et un organe d'arrêt en rotation (23) comprenant des galets (24) roulant sur des pistes, l'un de la vis et de l'écrou étant entraîné en rotation par le moteur et l'autre de la vis et de l'écrou portant les galets, et où les pistes sont ménagées dans une rainure (21, 22) opérée dans le support ; dans le second vérin, l'écrou et la vis sont disposés d'un côté de la plaque, un organe d'entraînement en rotation (11) mû par le moteur (10) est disposé de l'autre côté de la plaque, et une transmission (12) s'étendant entre ledit organe d'entraînement et celui de la vis et de l'écrou qui est entraîné en rotation par le moteur traverse la plaque ; et les moteurs sont placés du même côté de la plaque.

## Claims

1. A jointed structure segment (1) comprising a support (7, 8) leading to two adjacent elements (2, 3) of the jointed structure, at least one actuator placed on the support and comprising a motor (10), a nut (13), a screw (14) engaged into the nut, and a rotation stop member (23) comprising rollers (25, 26) rolling on tracks, one of the screw and of the nut being driven into rotation by the motor and the other of the screw and of the nut bearing the rollers, **characterized in that** the tracks are arranged in a groove (21, 22) made in the support, **in that** the support comprises a plate through which the groove is made, **in that** the nut and the screw are positioned on one side of the plate, **in that** a rotation drive member (11) driven by the motor (10) is positioned on the other side of the plate, and **in that** a transmission (12) extending between said driving member and that of the screw and of the nut which is driven into rotation by the motor crosses the plate.

2. The jointed structure segment according to claim 1, **characterized in that** the support comprises a second plate, through which a second groove is made, the second groove receiving some of the rollers, the screw and the nut being housed between these plates.

3. The jointed structure segment according to claim 1, **characterized in that** the rotation drive member (11) driven by the motor (10) has a length allowing the nut to be placed at half-length of the screw.

4. The jointed structure segment according to claim 1, **characterized in that** it comprises a second actuator placed on the support and also comprising a motor (10), a nut (13), a screw (14) engaged into the nut, and a rotation stop member (23) comprising rollers (24) rolling on tracks, one of the screw and of the nut being driven into rotation by the motor and the other of the screw and of the nut bearing the rollers, and wherein the tracks are arranged in a groove (21, 22) made in the support; in the second actuator, the nut and the screw are positioned on one side of the plate, a rotation drive member (11) driven by the motor (10) is positioned on the other side of the plate, and a transmission (12) extending between said driving member and that of the screw and of the nut which is driven into rotation by the motor crosses the plate; and the motors are placed on the same side of the plate.

## Patentansprüche

1. Segment (1) mit gelenkiger Struktur, umfassend einen zu zwei Nachbarelementen (2, 3) der gelenkigen Struktur führenden Träger (7, 8), mindestens ein auf dem Träger angebrachtes Stellglied mit einem Motor (10), einer Mutter (13), einer in die Mutter eingeschraubten Spindel (14) und einer auf Bahnen rollende Laufrollen (25, 26) umfassenden Rotationsblockierungseinrichtung (23), wobei das Eine der Bauteile Spindel und Mutter durch den Motor angetrieben wird und das Andere der Bauteile Spindel und Mutter die Laufrollen trägt, **dadurch gekennzeichnet, dass** die Bahnen in einem in den Träger eingearbeiteten Schlitz (21, 22) vorgesehen sind, dass der Träger eine von dem Schlitz durchquerte Platte umfasst, dass sich die Mutter und die Spindel auf einer Seite der Platte befinden, dass sich auf der anderen Seite der Platte eine durch den Motor (10) angetriebene Drehantriebseinrichtung (11) befindet, und dass die Platte durchquert wird von einer Transmission (12), die sich zwischen der genannten Antriebseinrichtung und der die Bauteile Spindel und Mutter umfassenden Einrichtung, angetrieben durch den Motor, erstreckt.

2. Segment mit gelenkiger Struktur nach Anspruch 1, **dadurch gekennzeichnet, dass** der Träger eine zweite Platte umfasst, in die ein zweiter Schlitz eingearbeitet ist, wobei der zweite Schlitz einige der Laufrollen aufnimmt und die Spindel und die Mutter sich zwischen den Platten befinden.

3. Segment mit gelenkiger Struktur nach Anspruch 1, **dadurch gekennzeichnet, dass** die durch den Motor (10) bewegte Drehantriebseinrichtung (11) eine Länge hat, die ermöglicht, die Mutter auf halber Länge der Spindel zu platzieren,

4. Segment mit gelenkiger Struktur nach Anspruch 1, **dadurch gekennzeichnet, dass** es ein zweites auf dem Träger angebrachtes Stellglied mit ebenfalls einem Motor (10), einer Mutter (13), einer in die Mutter eingeschraubten Spindel (14) und einer auf Bahnen rollende Laufrollen (24) umfassenden Rotationsblockierungseinrichtung (23) umfasst, wobei das Eine der Bauteile Spindel und Mutter durch den Motor angetrieben wird und das Andere der Bauteile Spindel und Mutter die Laufrollen trägt, und wo die Bahnen in einem in den Träger eingearbeiteten Schlitz (21, 22) vorgesehen sind; sich dabei bei dem zweiten Stellglied die Mutter und die Spindel auf einer Seite der Platte befinden, sich eine durch den Motor (10) angetriebene Drehantriebseinrichtung (11) auf der anderen Seite der Platte befindet, und die Platte durchquert wird von einer Transmission (12), die sich zwischen der genannten Antriebseinrichtung und der die Bauteile Spindel und Mutter umfassenden Einrichtung, angetrieben durch den Motor, erstreckt; und sich die Motoren auf derselben Seite der Platte befinden.
